# NEUE EUROPÄISCHE PATENTSCHRIFT

(11) **EP 1 138 526 B2**
(45) Veröffentlichungstag und Bekanntmachung des Hinweises auf die Entscheidung über den Einspruch: **30.03.2011**
(45) Hinweis auf die Patenterteilung: 22.08.2007
(21) Anmeldenummer: 01102087.2
(22) Anmeldetag: 31.01.2001
(51) Int. Cl.: B60B 3/10, B60B 3/06, B60B 3/02, B60B 1/08

(54) **Rad mit Speichen mit V-förmigem Querschnitt**
Spoked wheel with section in V-form
Roue à rayons avec section en forme de V

(30) Priorität: 31.03.2000 DE 10017028
(43) Veröffentlichungstag der Anmeldung: 04.10.2001
(73) Patentinhaber: Dr.Ing. H.C. F. Porsche Aktiengesellschaft, 70435 Stuttgart (DE)
(72) Erfinder: Bhambra, Ranjit, 75233 Tiefenbronn-Mühlhausen (DE)

(56) Entgegenhaltungen:
- DE-A- 1 802 298
- DE-U- 9 117 160
- DE-U- 9 301 314
- US-A- 5 548 896
- 'Das Grosse ADAC Autobuch', 1976, DAS BESTE GMBH, Stuttgart, ISBN: 3870700920 Seite 111

## Beschreibung

Die Erfindung betrifft ein Rad für Kraftfahrzeuge nach dem Oberbegriff des Patentanspruches 1.

Aus der gattungsgemäßen DE 18 02 298 A1 ist bereits ein Rad für Kraftfahrzeuge bekannt, bei dem eine Radnabe mit einer Felge durch Speichen verbunden ist, die einen Y-förmigen Querschnitt aufweisen. An der Vorderseite des Rades angeordnete Stehflansche der Speiche laufen auf einer scheibenförmigen Oberfläche der Radnabe aus. An der Rückseite des Rades vorgesehene gabelförmige Abschnitte der Stege sind an einem Ringkörper der Radnabe angeschlossen. Die zwischen den Speichen gebildeten Öffnungen sind in den an die Radnabe angrenzenden Bereiche teilweise durch ein Scheibenelement verschlossen. Die Radnabe ist mit zur Rückseite des Rades hin offenen Vertiefungen versehen, die zwischen Befestigungsöffnungen für Radschrauben angeordnet sind. Die Radnabe ist an ihrem inneren Umfang wie am ihrem äußeren Umfang jeweils durch einen durchgehenden, in etwa zylindrisch geformten Bereich begrenzt.

Gegenüber diesem Stand der Technik ist es Aufgabe der Erfindung, ein Rad für Kraftfahrzeuge zu schaffen, das bei hoher Festigkeit ein geringes Gewicht aufweist.

"Das grosse ADAC Autobuch", Verlag Das Beste, Stuttgart 1976, zeigt auf Seite 111 eine gattungsgemässe Felge aus Leichtmetall, bei der zwischen Radnabe und Felge angeordneten Speichen in einem mit der Radnabe verbundenen ersten Bereich einen massiven Querschnitt und in einem mit der Felge verbundenen zweiten Bereich einen V-förmigen Querschnitt aufweisen.

Erfindungsgemäss wird diese Aufgabe mit den Merkmalen des Patentanspruches 1 gelöst, Hierzu wird vorgeschlagen, bei einem gattungsgemässen Rad die Speichen in dem zweiten Bereich mit V-förmigen Querschnitt so zu gestalten, dass freie Stirnflächen an den das "V" bildenden Schenkeln mit einer in Längsrichtung der Speichen verlaufenden Verdickung versehen sind. Durch diese Verdickung wird die Empfindlichkeit der Stirnflächen und auch der Schenkel gegenüber Beschädigungen vermindert. Gleichzeitig trägt die Verdickung zu einer weiteren Erhöhung der Festigkeit der Speichen im zweiten Bereich bei.

Vorteilhafte Weiterbildungen der Erfindung sind in den Unteransprüchen beschrieben.

So wird vorgeschlagen, die Speichen korrespondierend zu Öffnungen zur Aufnahme von Befestigungsschrauben in der Radnabe anzuordnen. In diesem Fall befindet sich die Befestigungsschraube und damit die Radnabe einseitige Krafteinleitung in Verlängerung der Speiche, so daß eine zentrische Krafteinleitung in die Speiche erfolgt. Zusammen mit dem sich an die Radnabe anschließenden ersten Bereich der Speichen ist ein die Befestigungsschraube umfassender dritter Bereich gebildet, der zu einer guten Kraftverteilung und Krafteinleitung in die Speiche führt.

Die Radnabe soll vorzugsweise so ausgebildet sein, dass sie zwischen den Öffnungen für die Befestigungsschrauben Vertiefungen aufweist. Die Vertiefungen sind zur Innenseite des Rades hin offen. Am inneren sowie am äußeren Umfang der Radnabe ist jeweils ein durchgehender, in etwa zylindrisch ausgeführter Körper vorgesehen. Aussenseits ist die Radnabe durch eine Fläche abgeschlossen, die durch die Öffnungen für die Befestigungsschrauben durchbrochen ist. Soweit notwenig kann selbstverständlich in der Mitte der Radnabe eine durchgehende Öffnung zur Aufnahme eines Achszapfens vorgesehen sein. Insgesamt ist damit eine schalenförmige Radnabe gebildet, die bei hoher Steifigkeit ein geringes Gewicht aufweist.

Schließlich wird vorgeschlagen, die im zweiten Bereich den V-förmigen Querschnitt bildenden Schenkel so auszubilden, dass ihre Breite im Verlauf der Speiche zur Anbindung an die Felge hin ständig zunimmt. Gleichzeitig kann die Spreizung der Schenkel über den Verlauf der Speiche in Richtung auf die Felge erhöht oder die Schenkel mit einer Krümmung im Sinne einer Aufspreizung versehen werden. Diese im Anbindungsbereich der Speiche an die Felge zugesehene Maßnahme verbessert die Krafteinleitung von Umfangskräften aus der Speiche in die Felge. In diesem Zusammenhang kann es vorgesehen sein, dass die Wandstärke der Schenkel mit zunehmender Breite der Schenkel abnimmt. Ist an Stirnflächen der Schenkel eine Verdickung vorgesehen, so sollte deren Stärke jedoch in geringerem Maße abnehmen als die Wandstärke der Schenkel.

Die Erfindung ist nachstehend anhand eines in den Figuren gezeigten Ausführungsbeispieles näher erläutert.
Es zeigen:
- Fig. 1: eine Teilansicht eines Rades,
- Fig. 2: eine Rückansicht zur Fig. 1,

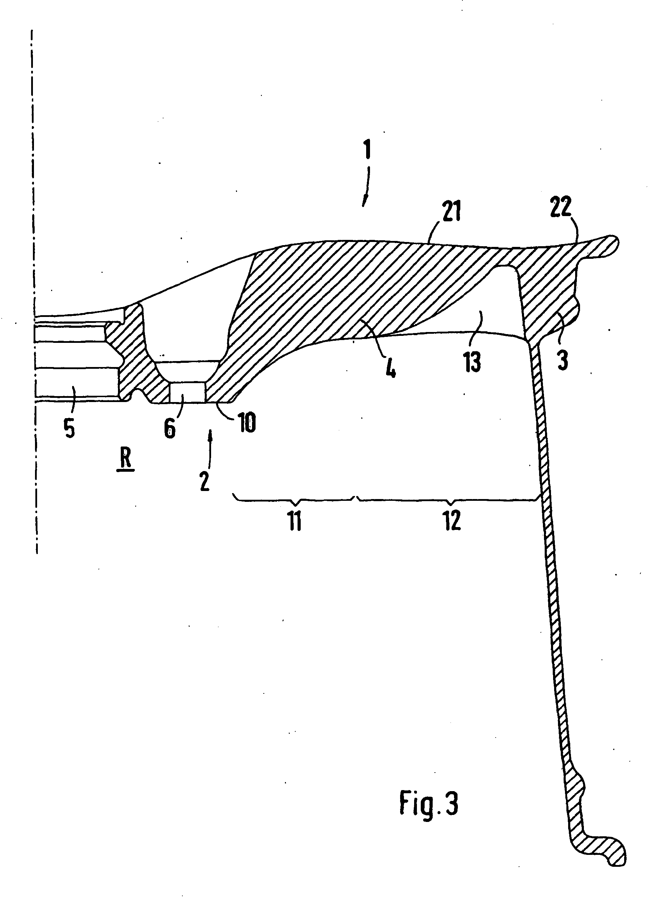

- Fig. 3: einen Schnitt nach der Linie III - III der Fig. 1,
- Fig. 4: einen Schnitt nach der Linie IV-IV,
- Fig. 5a bis Fig. 5p: Schnitte nach den Linien a-p der Fig. 1,
- Fig. 6: eine Gesamtansicht der Schnitte nach Fig. 5,
- Fig. 7: eine perspektivische Gesamtansicht des Rades von vorn und
- Fig. 8: eine perspektivische Gesamtansicht des Rades hinten.

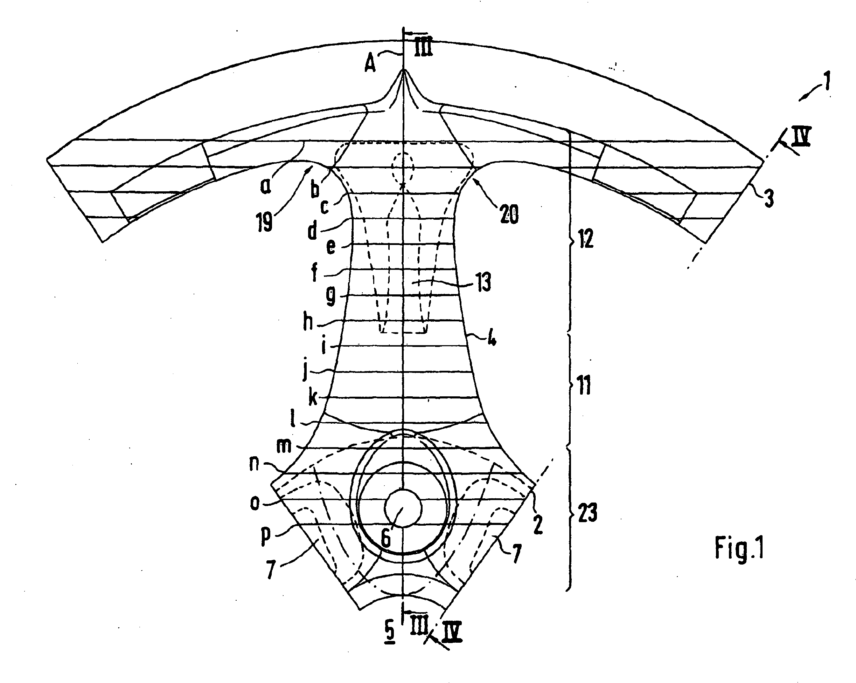

Fig. 1 zeigt eine Teilansicht eines Rades 1 bestehend aus einer Radnabe 2, einer Felge 3, sowie Speichen 4, die die Radnabe 2 mit der Felge 3 verbinden. Die Radnabe 2 weist eine zentrale Öffnung 5 zur Aufnahme eines nicht gezeigten Achszapfens sowie Öffnungen 6 für nicht gezeigte Befestigungsschrauben auf. Die Speichen 4 setzen an der Radnabe 2 im Bereich der Öffnungen 6 an und laufen am Rand der Felge 3 aus. Jede Speiche 4 liegt gemeinsam mit jeweils einer Öffnungen 6 auf einer radial verlaufenden Achse A.

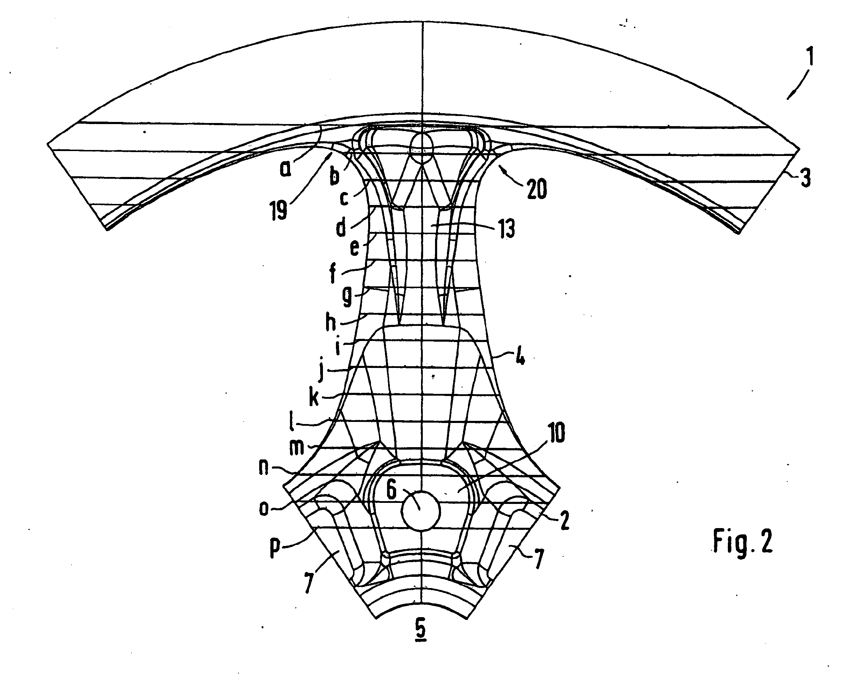

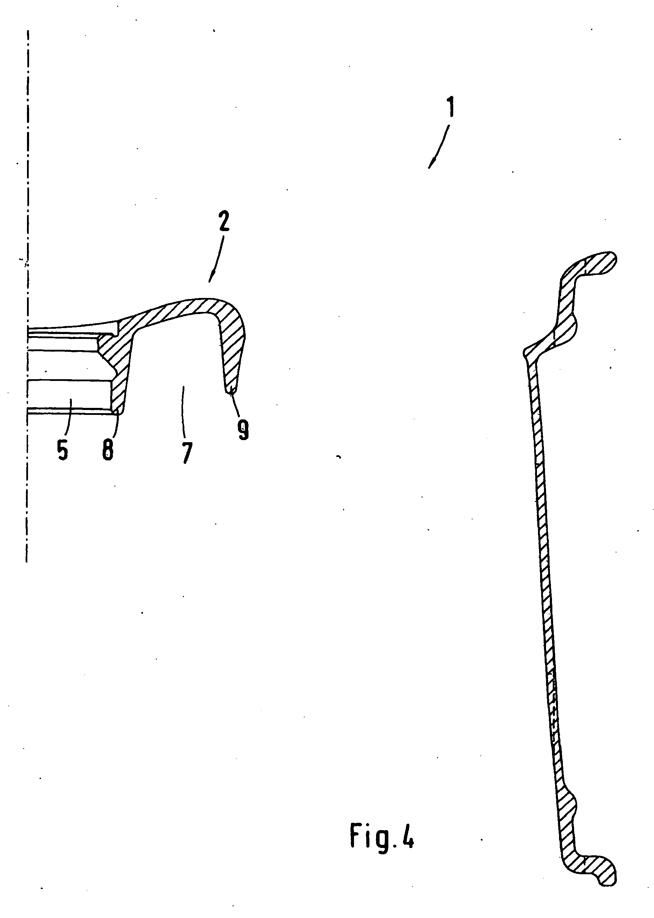

Rückseits ist die Radnabe 2 - wie in Fig. 2 dargestellt - mit Vertiefungen 7 versehen, die zwischen den Bohrungen 6 angeordnet sind und die sich zur Rückseite des Rades 1 hin öffnen. Wie im Schnitt nach Fig. 4 zu erkennen ist, sind am inneren Umfang der Radnabe 2 und am äußeren Umfang jeweils ein durchgehender, in etwa zylindrischer Körper 8, 9 gebildet, die zusammen sowohl die Vertiefungen 7 wie auch die Öffnungen 6 umfassen und in Umfangsrichtungen verlaufende, geschlossene Begrenzungen der Radnabe 2 bilden. An der Rückseite R des Rades 1 sind im Bereich der Öffnungen 6 Anlageflächen 10 ausgebildet, die jeweils zwischen zwei Vertiefungen 7 angeordnet sind. Die Anlageflächen 10 bilden die Kontaktfläche zwischen dem Rad 1 und einem nicht näher dargestellten Radträger.

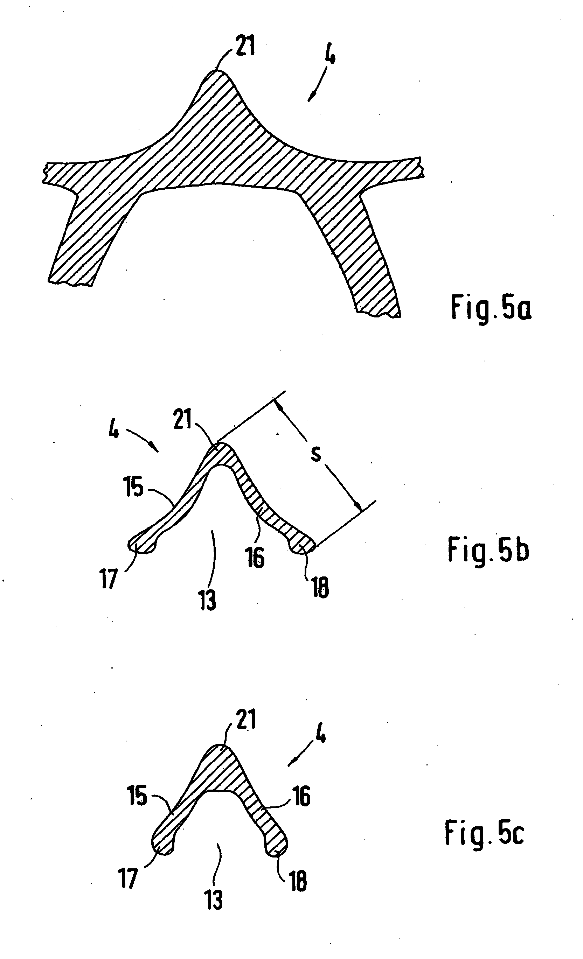

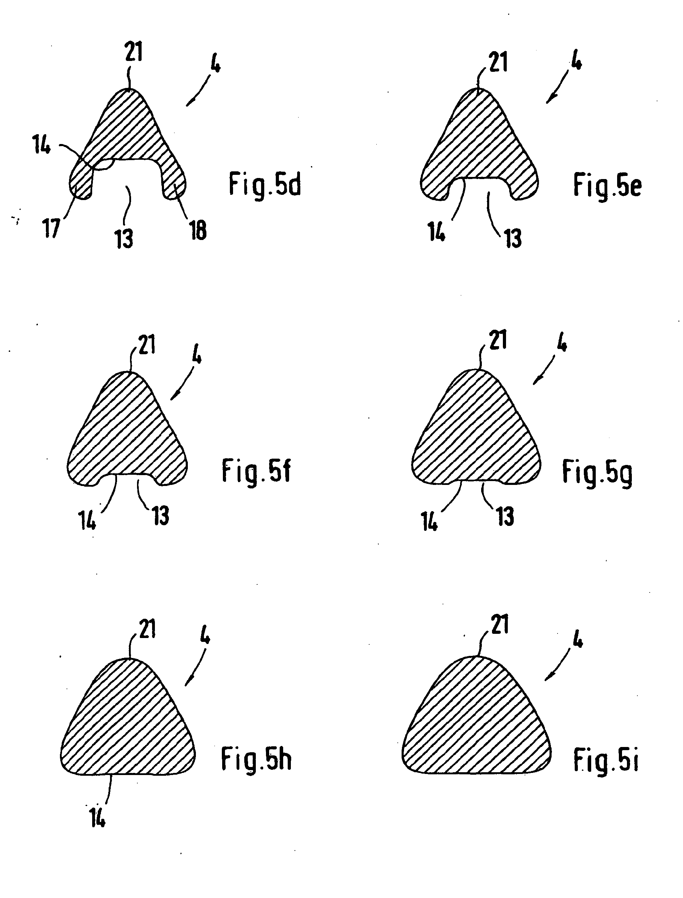

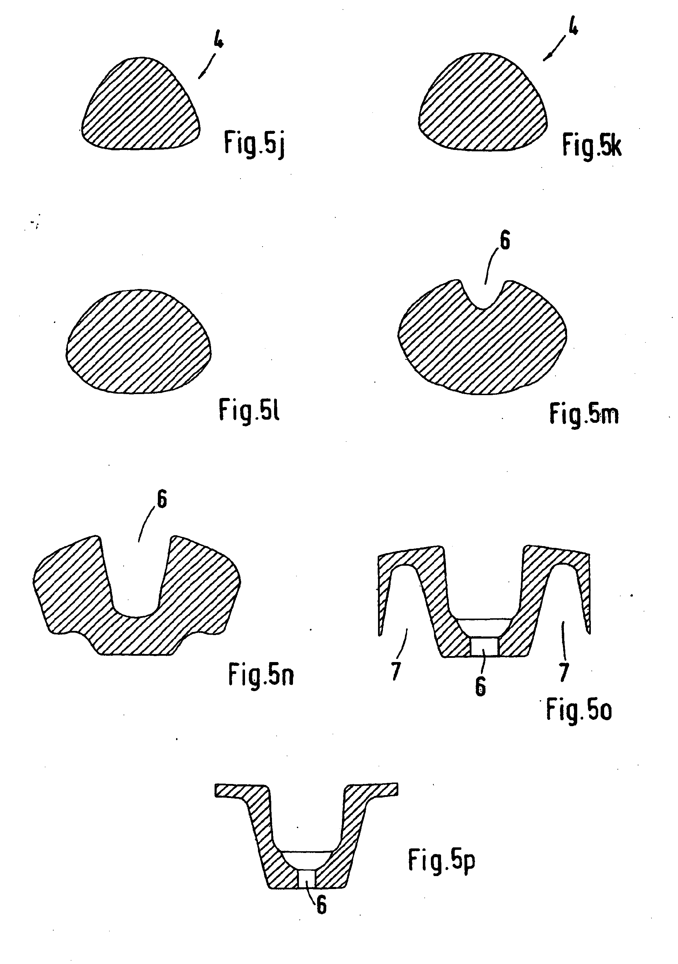

Jede Speiche 4 besteht aus zwei Bereichen 11, 12, die fließend ineinander übergehen. Im ersten Bereich 11, der sich unmittelbar an die Radnabe 2 anschließt, weist die Speiche 4 einen massiven Querschnitt auf, der in den Figuren 5i bis 5m näher dargestellt ist. Dabei ist der Querschnitt im Bereich des Ansatzes an der Radnabe 2 im wesentlichen ellipsenförmig (vgl. Fig. 5m) und wandelt sich im Verlauf der Speiche 4 in Richtung auf die Felge 3 zu einem dreieckigen Querschnitt um (vgl. Fig. 5i). Der zweite Bereich 12 schließt die verbleibende Lücke bis zur Felge 3 und ist in den Figuren 5a bis 5g näher dargestellt. Im zweiten Bereich 12 ist an dem der Rückseite R zugewandten Bereich der Speiche 4 eine mitiig der Speiche 4 angeordnete Kehle 13 vorgesehen, die ausgehend vom Anschluss des zweiten Bereiches 12 an den ersten Bereich 11 an Tiefe zunimmt und unmittelbar vor dem Übergang zur Felge 3 ihre größte Tiefe annimmt. Die sichtbare Kontur der Speiche 4 bleibt im Verlauf der Kehle 13 dreieckig, so daß sich im zweiten Bereich 12 für die Speiche 4 zunächst ein A-förmiger Querschnitt (siehe besonders Fig. 5d bis 5f) ergibt, der in einen V-förmigen Querschnitt ausläuft (Fig. 5b und 5c). Dabei weist die Kehle 13 zunächst eine ebene Grundfläche 14 auf, die bei Erreichen einer Mindestwandstärke dann stetig schmaler wird. Im Schnitt nach Fig. 5b ist der V-förmige Querschnitt gut zu erkennen; hier weist die Speiche 4 zwei Schenkel 15 und 16 auf, die an ihren Stirnseiten mit Verdickungen 17 und 18 versehen sind. Die Verdickungen 17 und 18 sind auch schon in den Schnitten nach Fig. 5c und Fig. 5d erkennbar.

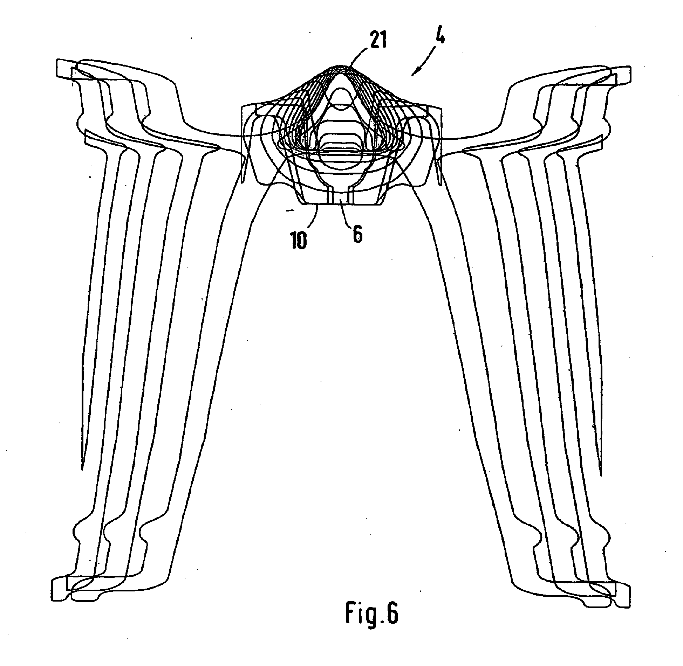

Die Fig. 6 zeigt die Lage der Schnitte nach den Fig. 5a bis 5p zueinander in einer radialen Ansicht entlang der Achse A.

In Vergleich der Schnitte nach Fig. 5c und Fig. 5b ist auch erkennbar, dass beim Übergang der Speiche 4 in die Felge 3 die Breite s der Schenkel 15 und 16 und gleichzeitig die Spreizung der Schenkel 15 und 16 zu den Verdickungen 17 und 18 hin durch eine Krümmung der Schenkel 15, 16 zunimmt. Hierdurch sind im Übergangsbereich von den Speichen 4 zur Felge 3 flächige Elemente 19 und 20 gebildet, die die Einleitung von Umfangskräften aus den Speichen 4 in die Felge 3 verbessern.

Ein an der Oberseite der Speiche 4 gebildete Steg 21 läuft an einem Rand 22 der Felge 3 aus.

Bei der dargestellten Anordnung der Speichen 4 gemeinsam mit jeweils einer Öffnungen 6 auf der radial verlaufenden Achse A kann der sich innerhalb der Radnabe 2 an den ersten Bereich 11 anschließende Bereich als dritter Bereich 23 (siehe auch strichpunktierte Linie in Fig. 1) der Speiche 4 betrachtet werden, der ringförmig die Öffnung 6 umschließt und sich an den ersten Bereich 11 anschließt. Die dritten Bereiche 23 des Rades 1 sind durch die Zwischenräume 7 voneinander abgegrenzt und die zylindrischen Körper 8, 9 miteinander verbunden.

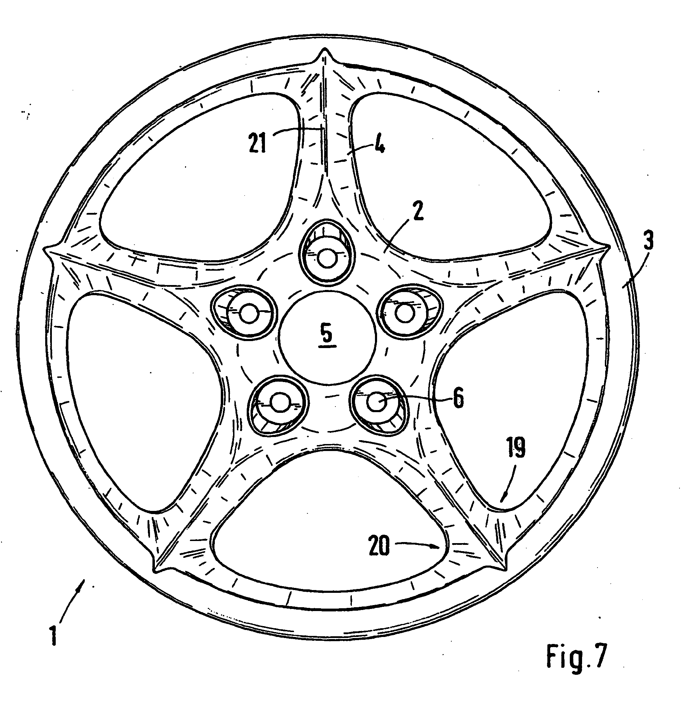

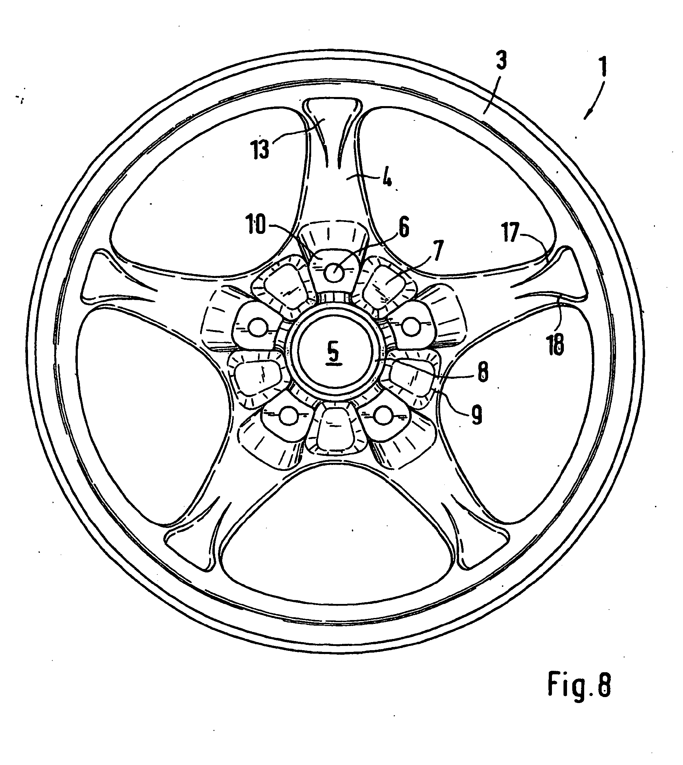

Das gesamte Rad ist nochmals in den Fig. 7 und 8 jeweils in einer Gesamtansicht dargestellt.

## Patentansprüche

1. Rad für Kraftfahrzeuge, bestehend aus einer Radnabe (2) und einer Felge (3), wobei die Radnabe und die Felge über Speichen (4) miteinander verbunden sind, wobei die Speichen (4) in einem ersten, mit der Radnabe (2) verbundenen Bereich (11) einen massiven Querschnitt und in einem zweiten, mit der Felge (3) verbundenen Bereich (12) einen V-förmigen Querschnitt aufweisen, **dadurch gekennzeichnet, daß** die Speichen (4) in ihrem Bereich (12) mit V-förmigen Querschnitt an freien Stirnflächen von Schenkeln (15, 16) jeweils eine Verdickung (17, 18) aufweisen.

2. Rad nach Anspruch 1, **dadurch gekennzeichnet, daß** die Speichen (4) korrespondierend zu in der Radnabe (2) vorgesehenen Öffnungen (6) zur Aufnahme von Befestigungsschrauben angeordnet sind.

3. Rad nach Anspruch 1 oder 2, **dadurch gekennzeichnet, daß** die Radnabe (2) Öffnungen (6) zur Aufnahme von Befestigungsschrauben aufweist, daß zwischen den Öffnungen Vertiefungen (7) vorgesehen sind und daß an der Innenseite und an der Außenseite der Radnabe jeweils ein durchgehender, in etwa zylindrischer Hohlkörper (8, 9) vorgesehen ist.

4. Rad nach einen der vorstehenden Ansprüche, **dadurch gekennzeichnet, daß** die Speichen (4) in ihrem Bereich (12) mit V-förmigen Querschnitt Schenkel (15, 16) aufweisen, wobei die Breite (s) der Schenkel zur Felge (3) hin stetig zunimmt und in einem Übergangsbereich von den Speichen zur Felge flächige Elemente (19, 20) gebildet sind.

## Claims

1. A wheel for motor vehicles, comprising a wheel hub (2) and a rim (3), wherein the wheel hub and the rim are connected to one another by spokes (4), **wherein** the spokes (4) have a solid cross-section in a first region (11) connected to the wheel hub (2), and a V-shaped cross-section in a second region (12) connected to the rim (3), **characterised in that,** in their region (12) with a V-shaped cross-section, the spokes (4) have a respective thickening (17, 18) on free end surfaces of arms (15, 16).

2. A wheel according to claim 1, **characterised in that** the spokes (4) are arranged so as to correspond to openings (6) which are provided in the wheel hub (2) and are intended to receive fastening screws.

3. A wheel according to claim 1 or 2, **characterised in that** the wheel hub (2) has openings (6) which are intended to receive fastening screws, **in that** depressions (7) are provided between the openings and **in that** a respective continuous, approximately cylindrical hollow body (8, 9) is provided on the inside and the outside of the wheel hub.

4. A wheel according to any one of the preceding claims, **characterised in that,** in their region (12) with a V-shaped cross-section, the spokes (4) have arms (15, 16), wherein the width (s) of the arms increases continuously in the direction of the rim (3), and planar elements (19, 20) are formed in a transition region from the spokes to the rim.

## Revendications

1. Roue pour véhicules automobiles, formée par un moyeu (2) et une jante (3), le moyeu et la jante étant reliés entre eux par des rayons (4), les rayons (4) ayant une section pleine dans une première zone (11) reliée au moyeu (2) et une section en forme de V dans une deuxième zone (12) reliée à la jante (3), **caractérisée en ce que** les rayons (4), dans leur zone (12) avec la section en forme de V, comportent respectivement un renflement (17, 18) sur chacune des faces frontales libres des branches (15, 16).

2. Roue selon la revendication 1, **caractérisée en ce que** les rayons (4) sont disposés en correspondance avec des orifices (6), prévus dans le moyeu (2) et destinés à recevoir des vis de fixation.

3. Roue selon la revendication 1 ou 2, **caractérisée en ce que** le moyeu (2) comporte des orifices (6) destinés à recevoir des vis de fixation, **en ce que** des creux (7) sont prévus entre les orifices et **en ce que** sur le côté intérieur et sur le côté extérieur du moyeu est prévu chaque fois un corps creux (8, 9) continu, sensiblement cylindrique.

4. Roue selon l'une quelconque des revendications précédentes, **caractérisée en ce que,** dans leur zone (12) avec la section en forme de V, les rayons (4) comportent des branches (15, 16), la largeur (s) des branches augmentant progressivement vers la jante (3) et des éléments plats (19, 20) étant formés dans une zone de transition des rayons vers la jante.
